# EUROPÄISCHE PATENTANMELDUNG

(11) **EP 0 865 976 A2**
(43) Veröffentlichungstag der Anmeldung: **23.09.1998**
(21) Anmeldenummer: 98105102.2
(22) Anmeldetag: 20.03.1998
(51) Int. Cl.: B60R 25/00, B60R 25/04

(54) **Sicherungssystem für Kraftfahrzeuge**

(30) Priorität: 21.03.1997 DE 19711745
(71) Anmelder: Hahn, G. Uwe, 23562 Lübeck (DE); Büttner, Manfred, 23562 Lübeck (DE); Brockmann, Stefan, 23562 Lübeck (DE)
(72) Erfinder: Hahn, G. Uwe, 23562 Lübeck (DE); Büttner, Manfred, 23562 Lübeck (DE); Brockmann, Stefan, 23562 Lübeck (DE)
(74) Vertreter: Jaeschke, Rainer, Dipl.-Ing.

(57) **Zusammenfassung**

Die Erfindung betrifft ein Sicherungssystem für Kraftfahrzeuge gegen unbefugte Benutzung mit einem im Kraftfahrzeug angeordneten Funkempfänger zum Empfang eines flächendeckend abgestrahlten Funksignals und zum Erzeugen eines Schaltsignals, wenn ein auf den Funkempfänger codiertes Funksignal empfangen wird, und mit wenigstens einer Schalteinrichtung zum Auslösen eines Alarms und/oder zum Unterbrechen wenigstens einer der Betriebsfunktionen des Kraftfahrzeuges, wobei der Funkempfänger mit einem Sendermodul eine erste Baugruppe bildet und die Schalteinrichtung mit einem Empfängermodul wenigstens eine zweite Baugruppe bildet, und das Sendermodul aufgrund des Schaltsignals ein drahtloses Funksignal mit einem ersten Datentelegramm zu dem Empfängermodul sendet, um die Schalteinrichtung zu aktivieren. Zur Erhöhung der Sicherheit gegen eine Manipulation und/oder Deaktivierung des Sicherungssystems ist gemäß der Erfindung vorgesehen, daß die Schalteinrichtung aufgrund wenigstens eines zweiten Signals unabhängig von dem Funksignal der ersten Baugruppe aktivierbar ist.

## Beschreibung

Die Erfindung betrifft ein Sicherungssystem für Kraftfahrzeuge gegen unbefugte Benutzung mit einem im Kraftfahrzeug angeordneten Funkempfänger zum Empfang eines flächendeckend abgestrahlten Funksignals und zum Erzeugen eines Schaltsignals, wenn ein auf den Funkempfänger codiertes Funksignal empfangen wird, und mit wenigstens einer Schalteinrichtung zum Auslösen eines Alarms und/oder zum Unterbrechen wenigstens einer der Betriebsfunktionen des Kraftfahrzeuges, wobei der Funkempfänger mit einem Sendermodul eine erste Baugruppe bildet und die Schalteinrichtung mit einem Empfängermodul wenigstens eine zweite Baugruppe bildet, und das Sendermodul aufgrund des Schaltsignals ein drahtloses Funksignal mit einem ersten Datentelegramm zu dem Empfängermodul sendet, um die Schalteinrichtung zu aktivieren. Das Sicherungssystem kann insbesondere in Personenkraftwagen oder Lastkraftwagen eingesetzt werden.

Derartige Sicherungssysteme, bei denen eine Stillegung und/oder Aktivierung von Alarmsignalen eines Kraftfahrzeuges mittels der Übersendung eines codierten Funksignals erfolgt, sind beispielsweise aus der WO 95/13943, US 5,370,201 und US 5,276,728 bekannt. Das Funksignal wird durch ein im wesentlichen flächendeckendes Netz von Sendestationen ausgestrahlt, wenn der berechtigte Benutzer beispielsweise mittels eines codierten Telefonanrufes die Ausstrahlung des codierten Funksignals veranlaßt. Insbesondere können für die Anwendung derartiger Sicherungssysteme Pager oder Mobilfunktelefonsysteme eingesetzt werden, bei denen auch codierte Funksignale übermittelt werden.

Weiterhin ist es aus der EP 0 745 522 A1 bekannt, den Funkempfänger räumlich getrennt von der Schalteinheit in das Kraftfahrzeug einzubauen. Der Funkempfänger ist mit einem Sendermodul verbunden, das nach Empfang des codierten Funksignals ein internes Funksignal zu einem Empfängermodul sendet, das mit der Schalteinrichtung verbunden ist. Die Schalteinrichtung wird durch dieses interne Funksignal aktiviert. Eine Überbrücken des Sicherungssystems wird durch den getrennten Aufbau wirksam verhindert.

Bei dem bekannten Sicherungssystem besteht ein Nachteil darin, daß bei unterbrochener Funkverbindung zwischen dem Sendermodul der ersten Baugruppe und dem Empfängermodul der zweiten Baugruppe eine Aktivierung der Schalteinrichtung nicht mehr möglich ist. Eine derartige Unterbrechung kann beispielsweise durch eine Störsignal erzeugt werden. In diesem Fall wäre das Sicherungssystem überbrückt, und das Kraftfahrzeug könnte auch in unbefugter Weise bewegt werden. Auch könnte die erste Baugruppe entdeckt werden, wodurch ein Überbrücken und/oder Zerstören des Sendermoduls das Sicherungssystem außer Kraft setzen würde. Auch könnte die Antenne des Funkempfängers abgeschirmt werden, wodurch ebenfalls das Sicherungssystem außer Kraft gesetzt werden könnte.

Der Erfindung liegt die Aufgabe zugrunde, ein Sicherungssystem der eingangs geschilderten Art so zu verbessern, daß eine Stillegung oder die Aktivierung eines Alarmsignals des Kraftfahrzeugs auch bei unterbrochener und/oder gestörter Funkverbindung erfolgen kann.

Die Aufgabe wird gemäß der Erfindung dadurch gelöst, daß die Schalteinrichtung aufgrund wenigstens eines zweiten Signals unabhängig von dem Funksignal der ersten Baugruppe aktivierbar ist. Das Vorsehen der Möglichkeit der Stillegung des Kraftfahrzeuges durch ein weiteres, von dem ersten internen Funksignal unabhängigen Signal hat den Vorteil, daß eine Aktivierung der Schalteinheit auch bei unterbrochener internen Funkverbindung bewirkt werden kann.

Es besteht eine Vielzahl von Möglichkeiten, das zweite Signal zu erzeugen. Es kann beispielsweise vorgesehen werden, daß das zweite Signal durch Auslösen einer üblichen Alarmanlage erzeugt wird. Auch kann vorgesehen werden, daß das zweite Signal durch eine elektronische Wegfahrsperre erzeugt wird. Diese Möglichkeiten sind jedoch dann wirkungslos, wenn der unbefugte Benutzer des Kraftfahrzeuges im Besitz der passenden Kraftfahrzeugschlüssel und Decoderschlüssel für die Wegfahrsperre ist. Das ist bei Mietwagen in der Regel der Fall.

Gemäß einer bevorzugten Ausführungsform der Erfindung ist vorgesehen, daß die zweite Baugruppe einen Zeitgeberschaltkreis aufweist, der bei Erreichen einer vorbestimmbaren Zeit das zweite Signal ausgibt, und daß das Sendermodul der ersten Baugruppe wenigstens ein zeitlich getaktetes Funksignal mit einem anderen Datentelegramm aussendet, das von dem Empfängermodul empfangen wird und den Zeitgeberschaltkreis zurücksetzt, so daß bei unterbrochener Funkverbindung die Schalteinrichtung nach Ablauf der vorbestimmbaren Zeit aktiviert wird. Dies hat den Vorteil, daß die Funkverbindung ständig überprüft wird. Es ist nicht erforderlich, in der zweiten Baugruppe ein Sendermodul zur aktiven Überprüfung der Funkverbindung vorzusehen. Vielmehr ist die zweite Baugruppe vollkommen unabhängig und wird sich bei unterbrochener Funkverbindung nach Ablauf der vorbestimmbaren Zeitdauer selbst aktivieren. Ein Stören und/oder Überbrücken der Funkverbindung wäre somit wirkungslos.

Gemäß einer anderen Ausführungsform der Erfindung ist vorgesehen, daß das erste und das zweite Signal unterschiedliche Datentelegramme aufweisen, und daß aufgrund der unterschiedlichen Datentelegramme verschiedene Schalteinrichtungen aktivierbar sind. Dadurch wird erreicht, daß beispielsweise aufgrund des zweiten Signals ein unmittelbare Stillegung des Kraftfahrzeuges erfolgt, während durch das erste Signal eine Stillegung erst nach vorhergehender Warnung des Fahrers über die bevorstehende Stillegung erfolgt.

Es kann aber auch vorgesehen werden, daß das zweite Signal von einer Sendestation mit begrenzter Reichweite in der Nähe des Kraftfahrzeuges aussendbar ist und von dem Empfängermodul der zweiten Baugruppe empfangen wird. Dies hat den Vorteil, daß beispielsweise die Polizei oder ein anderes hoheitliches Organ die Schalteinrichtung insbesondere zum Stillegen des Kraftfahrzeuges aktivieren kann. Es kann dabei vorgesehen werden, daß das zweite Signal ein Datentelegramm enthält, aufgrund dessen ein unmittelbares Unterbrechen wenigstens einer der Betriebsfunktionen des Kraftfahrzeuges bewirkt werden kann.

Es kann hierbei vorgesehen werden, daß die Sendestation mit begrenzter Reichweite ein Handsender ist. Dies hat den Vorteil, daß das Kraftfahrzeug auch dann stillgelegt werden kann, wenn es sich außerhalb der Reichweite der Sender für das flächendeckend ausgestrahlte Funksignal befindet. Das kann insbesondere bei der Verfolgung von gestohlenen Kraftfahrzeugen in einem anderen Hoheitsgebiet vorteilhaft sein.

Grundsätzlich kann vorgesehen werden, daß mehrere Sendestationen mit begrenzter Reichweite entlang einer Grenze eines Staates aufgestellt sind. Dies hat den Vorteil, daß die Schalteinheit in dem Kraftfahrzeug bei Überschreiten der Grenze automatisch aktiviert werden würde, wodurch beispielsweise ein unbefugtes Überführen des Kraftfahrzeuges in ein anderes Hoheitsgebiet wirksam vermieden werden kann.

Gemäß einer weiteren Ausführungsform der Erfindung ist vorgesehen, daß das Sicherungssystem derart programmierbar ist, daß die Schalteinheit nur aufgrund von Signalen mit einem bestimmten Datentelegramm aktivierbar ist. Dadurch wird in vorteilhafter Weise erreicht, daß der berechtigte Benutzer in der Lage ist, beispielsweise eine Aktivierung der Schalteinheit durch das zweite Signal von einem Handgerät oder durch Sendestationen entlang einer Grenze zu verhindern. Dies kann dann zweckmäßig sein, wenn der rechtmäßige Benutzer mit dem Kraftfahrzeug über die Grenze fährt und/oder sich stets im Grenzbereich aufhält.

Weiterhin kann ein Codezahlenschloß zum Programmieren des Sicherungssystems und/oder zum Rücksetzen der Schalteinrichtung vorgesehen sein. Hierdurch kann der rechtmäßige Eigentümer leicht die Programmierung oder die Rücksetzung der Schalteinrichtung selbst vornehmen.

Gemäß einer weiteren Ausgestaltung der Erfindung kann vorgesehen werden, daß das getaktete Zeitsignal des Sendermoduls ein Datentelegramm enthält, anhand dessen das zweite Signal von einem externen Empfangs- und Sendegerät erzeugt werden kann. Weiterhin kann das Datentelegramm des getakteten Zeitsignals Angaben über das Kraftfahrzeug in codierter Form enthalten. Dies hat den Vorteil, daß das Kraftfahrzeug zunächst unbemerkt kontrolliert werden kann. Sofern sich herausstellt, daß das Kraftfahrzeug unbefugt benutzt worden ist, kann mittels des erzeugbaren zweiten Funksignals das Kraftfahrzeug stillgelegt werden.

Hierbei ist es in jedem Fall zweckmäßig, wenn das externe Empfangs- und Sendegerät durch eine zusätzliche Codierung gesichert ist. Dadurch wird gewährleistet, daß nur berechtigte Personen, beispielsweise die Polizei, in die Lage versetzt werden, die entsprechend ausgerüsteten Kraftfahrzeuge stillzulegen.

Gemäß einer Ausführungsform der Erfindung wird die zweite Baugruppe vom Bordnetz mit Energie gespeist, und die Schalteinrichtung weist wenigstens ein Relais auf, das im nicht aktivierten Zustand angezogen ist und beim Abtrennen der Stromversorgung zur zweiten Baugruppe zum Auslösen eines Alarms und/oder zum Unterbrechen wenigstens einer der Betriebsfunktionen des Kraftfahrzeuges abfällt. Dadurch wird erreicht, daß ein Abklemmen der zweiten Baugruppe vom Bordnetz automatisch die Stillegung des Kraftfahrzeuges und/oder die Aktivierung der Alarmsignale bewirkt. Das Relais ist vorzugsweise bistabil ausgesaltet und behält den abgefallenen Zustand auch nach dem Wiederanklemmen der Stromversorgung. Eine Rücksetzung ist nur noch mit einem Code oder dergleichen möglich.

Es ist offensichtlich, daß durch die Erfindung ein Sicherungssystem bereitgestellt wird, daß ein Höchstmaß an Sicherheit gegenüber Manipulationen aufweist. Auch wenn in die erste Baugruppe deaktiviert werden könnte, kann die zweite Baugruppe vollkommen unabhängig aktiviert werden. Eine Stillegung des Kraftfahrzeuges ist somit auch dann möglich, wenn sich das Kraftfahrzeug außerhalb der Reichweite der flächendeckend ausgestrahlten codierten Funksignale befindet.

Die Erfindung wird im folgenden anhand der schematischen Zeichnung näher erläutert. Es zeigen:

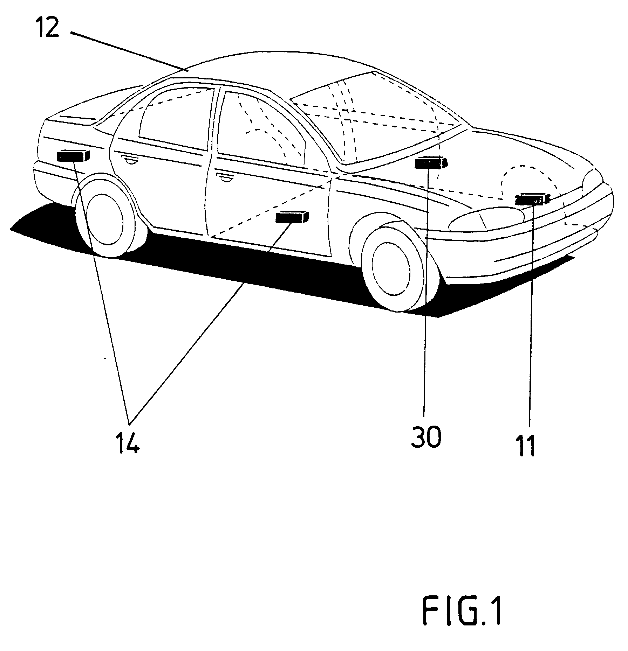

- Fig. 1: ein Kraftfahrzeug mit einem Sicherungssystem gemäß der Erfindung,
- Fig. 2: ein Blockschaltbild des Sicherungssystems gemäß der Erfindung,
- Fig. 3: im Schema eine Anwendung des Sicherungssystems gemäß der Erfindung, und
- Fig. 4: im Schema eine andere Anwendung des Sicherungssystems gemäß der Erfindung.

Das in der Zeichnung dargestellte Sicherungssystem weist eine erste Baugruppe 11, die Empfangs- und Sendeeinheit, auf, die beispielsweise im Motorraum des Kraftfahrzeuges 12 angeordnet ist. Die erste Baugruppe 11 ist mit einem Funkempfänger 13 versehen, um ein codiertes, flächendeckend abgestrahltes Funksignal, beispielsweise ein Pager-Signal, zu empfangen.

Das Sicherungssystem weist ferner eine oder mehrere zweite Baugruppen 14, die Moduleinheiten, auf, die an anderen Stellen des Kaftfahrzeuges 12 untergebracht sein können. Es kann vorgesehen werden, daß je eine zweite Baugruppe zum Aktivieren der Warnblinkanlage, zum Aktivieren des Signalhorns, zum Unterbrechen der Treibstoffversorgung und zum Unterbrechen des Zündstromkreislaufes vorgesehen ist.

Ferner kann vorgesehen werden, daß eine zweite Baugruppe eine Sprachbox 30 aktiviert, durch die der unbefugte Benutzer auf die bevorstehende Stillegung des Kraftfahrzeuges aufmerksam gemacht wird. Die Sprachbox kann aber auch unmittelbar durch die erste Baugruppe aktiviert werden. Die einzelnen Baugruppen sind vorzugsweise an unzulänglichen Stellen des Kraftfahrzeuges installiert. Die erste Baugruppe, die Empfangs- und Sendeeinheit, ist dabei zweckmäßigerweise an eine für den Empfang des codierten Funksignals optimierten Stelle angeordnet oder mit einer entsprechenden Antenne versehen.

Die erste Baugruppe 11 steht über eine drahtlose Funkstrecke in Verbindung mit der oder den zweiten Baugruppen 14. Im einzelnen ist die Anordnung so getroffen, daß die erste Baugruppe 11 ein Sendermodul 15 umfaßt. das in Verbindung mit dem Funkempfänger 13 steht. Das Sendermodul 15 sendet ein erstes Signal mit einem ersten Datentelegramm 1, wenn das codierte Funksignal empfangen wird. Das erste Signal wird von einem Empfängermodul 25 der zweiten Baugruppe 14 empfangen, das in Verbindung mit einem Decoder 16 steht. Der Decoder 16 erkennt das Datentelegramm und aktiviert entsprechend die Schalteinrichtung 17 der zweiten Baugruppe 14 des Sicherungssystems.

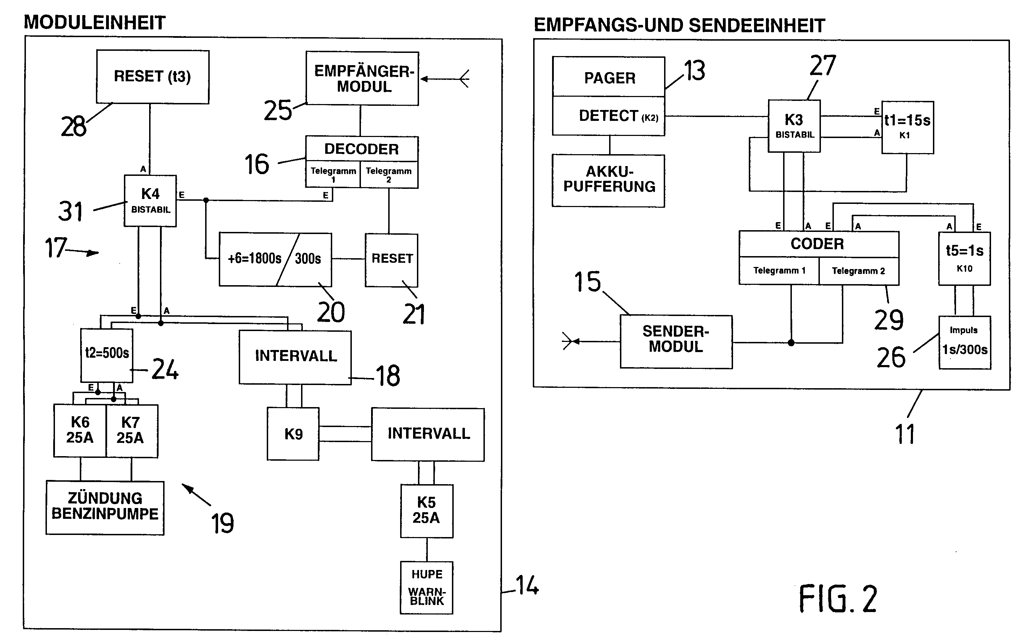

Die Schalteinrichtung 17 kann beispielsweise ein bistabiles Relais 31 aufweisen, das in Verbindung mit einer oder mehreren Schalteinheiten 18, 19 steht. Die Schalteinheit 18 ist bei dem in Fig. 2 dargestellten Ausführungsbeispiel als Intervallschalter ausgebildet und betätigt intermittierend das Signalhorn und die Warnblinker am Kraftfahrzeug. Die Schalteinheit 19 weist einen Zeitgeber 24 auf, um eine oder mehrere Betriebsfunktionen des Kraftfahrzeuge, wie Zündung oder Benzinpumpe, nach einer vorbestimmten Zeit, beispielsweise nach 3 bis 5 min., zu unterbrechen. Dadurch wird erreicht, daß der Fahrer ausreichend Zeit zum Anhalten des Kraftfahrzeuges erhält. Die bevorstehende Stillegung kann optisch und/oder akustisch, beispielsweise durch die Sprachbox 30, angezeigt oder angekündigt werden.

Bei dem in der Zeichnung dargestellten Ausführungsbeispiel sind die Schalteinheiten einer zweiten Baugruppe zugeordnet. Es ist selbstverständlich auch möglich, diese Schalteinheiten jeweils einer separaten zweiten Baugruppe zuzuordnen.

Bei dem in Fig. 2 dargestellten Ausführungsbeispiel umfaßt die zweite Baugruppe 14 ferner einen Zeitgeberschaltkreis 20, der ein zweites Signal nach Ablauf einer vorbestimmbaren Auslösezeit auslöst. Dieses Signal aktiviert unmittelbar die Schalteinrichtung 17. Die erste Baugruppe 11 ist hierbei so ausgebildet, daß ein codiertes internes Funksignal mit einem zweiten Datentelegramm 2 über das Sendermodul 15 an das Empfängermodul 25 taktweise in einem vorbestimmten Zeitabstand, der kleiner als die vorbestimmbare Auslösezeit ist, gesandt wird. Hierzu ist eine weitere Zeitgebereinheit 26 in der ersten Baugruppe vorgesehen.

Der Decoder 16 erkennt dieses Signal und schaltet damit einen Rücksetzungsschaltkreis 21, der den Zeitgeberschaltkreis 20 zurücksetzt. Somit wird in einfacher Weise die Funkverbindung zwischen den einzelnen Baugruppen geprüft. Bei einer unterbrochenen Funkverbindung erfolgt automatisch eine Aktivierung der Schalteinrichtung 17. Die Auslösezeitdauer kann beispielsweise 1800 sec. betragen, während das Rücksetzungssignal 2 alle 300 sec. für die Dauer von 1 sec. gesendet wird. Eine Aktivierung der Schalteinrichtungen erfolgt dann nach sechs aufeinanderfolgenden Zeitperioden, in denen kein Rücksetzungssignal mit dem zweiten Datentelegramm 2 empfangen worden ist.

Zur Erhöhung der Sicherheit gegen Manipulationen weist die erste Baugruppe 11 ein bistabiles Relais 27 auf, daß von dem Schaltsignal des Funkempfängers 13 geschaltet wird. Dadurch wird erreicht, daß nach der Aktivierung des Sicherungssystems dieses nicht durch einfaches Unterbrechung der Stromversorgung deaktiviert werden kann. Zum Rücksetzen und/oder Programmieren des Sicherungssystems ist ein Rücksetzungsschaltkreis 28 vorgesehen, der unmittelbar mit den zweiten Baugruppen 14 zusammenwirkt. Der Rücksetzungsschaltkreis 28 kann einen Zahlencodeschalter aufweisen. Ferner kann ein Coder 29 vorgesehen sein, der anhand des empfangenen codierten Funksignals das interne Signal mit dem ersten Datentelegramm 1 und das getaktete interne Signal mit dem Datentelegramm 2 erzeugt. Ferner ist eine akkugepufferte Stromversorgung des Funkempfängers 13 vorgesehen, damit das Sicherungssystem auch bei Abklemmen der ersten Baugruppe von dem Bordnetz durch das flächendeckend abgestrahlte codierte Funksignal aktiviert werden kann.

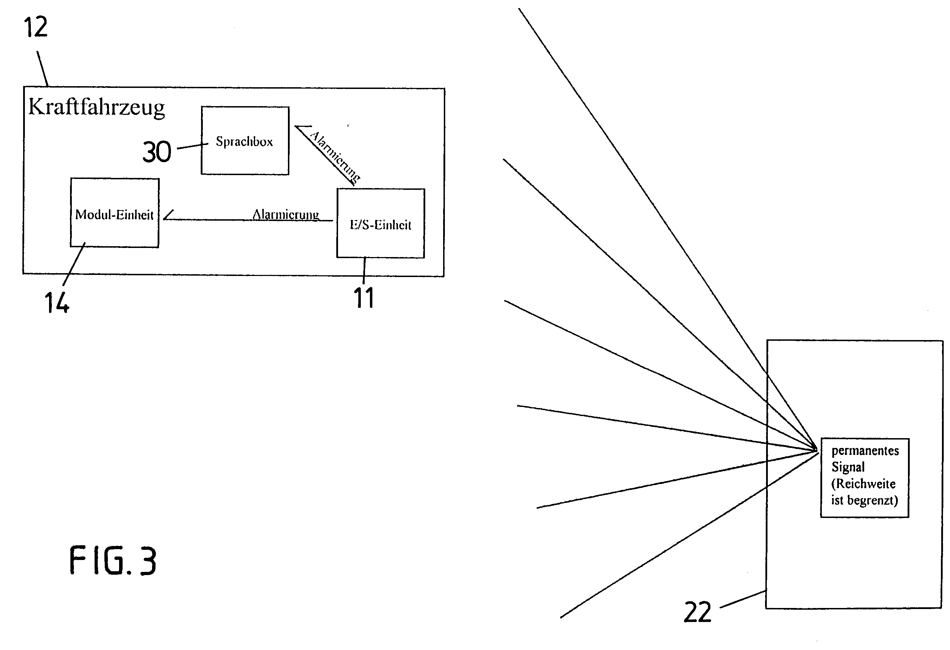

In der Fig. 3 ist schematisch eine andere Ausführungsform eines Sicherungssystems dargestellt. Grundsätzlich kann dieses Sicherungssystem auch entsprechend dem gemäß Fig. 2 ausgebildet sein. Hier ist eine Sendestation 22 vorgesehen, die ein in räumlich begrenztes Signal aussendet, daß von dem Empfängermodul der zweiten Baugruppe oder durch den Funkempfänger der ersten Baugruppe empfangen wird. In beiden Fällen erfolgt eine Aktivierung der Schalteinrichtung 17, wodurch eine Stillegung und/oder ein Einschalten der Alarmsignale am Kraftfahrzeug erfolgt. Die Sendestation 22 kann beispielsweise als Handgerät ausgebildet sein. Es ist aber auch möglich, eine Vielzahl derartiger Sendeeinrichtungen entlang einer Grenze oder einer Linie aufzustellen, um ein Überschreiten dieser Grenze oder Linie mit dem Kraftfahrzeug zu verhindern.

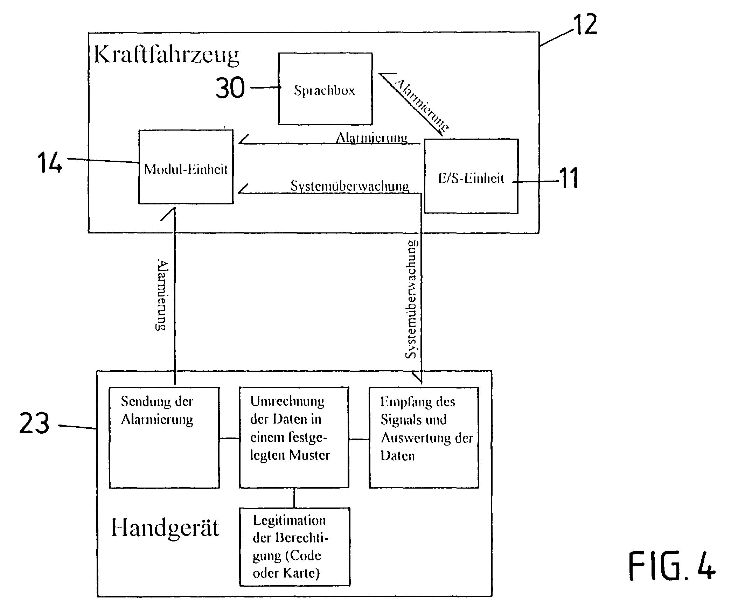

In der Fig. 4 ist eine weitere Ausführungsform des Sicherungssystems gemäß der Erfindung schematisch dargestellt. Auch diese Ausführungsform kann entsprechend der gemäß Fig. 2 ausgebildet und entsprechend dem Sicherungssystem gemäß Fig. 3 eingesetzt werden. Hier ist ein externes Empfangs- und Sendegerät 23 vorgesehen, das die taktweisen internen Funksignale empfängt. Anhand des Datentelegramms des internen Funksignals kann das Kraftfahrzeug ohne weitere überprüft werden. Sofern das Kraftfahrzeug als gestohlen gemeldet worden ist, oder der Fahrer sich auffällig verhält, kann mit dem externen Empfangs- und Sendegerät anhand des empfangenen Funksignals ein Signal ausgesendet werden, mit dem die Schalteinrichtung zumindest zur Stillegung des Kraftfahrzeuges aktiviert werden kann. Das externe Empfangs- und Sendegerät kann beispielsweise erst durch einen Legitimationscode in die Lage versetzt werden, ein derartiges Signal auszusenden. Hierdurch wird ein Mißbrauch weitgehend vermieden.

Es kann ferner vorgesehen werden, daß der Decoder 16 mehrere unabhängige Schalteinrichtungen 17 schaltet oder daß in unterschiedlichen zweiten Baugruppen unterschiedlich programmierte Decoder 16 vorgesehen sind. Dadurch kann erreicht werden, daß mit unterschiedlichen Signalen und unterschiedlichen Datentelegrammen verschiedene Schalteinrichtungen aktiviert werden können. So kann beispielsweise vorgesehen werden, daß das externe Empfangs-und Sendegerät 23 der Polizei ein zweites Signal mit einem Datentelegramm erzeugt, das den Zeitgeber 24 überbrückt und eine unmittelbare Stillegung des Kraftfahrzeuges bewirkt. Dies kann in manchen Fällen, insbesondere bei der Verfolgung von verdächtigen Kraftfahrzeugen, zweckmäßig sein.

Vorstehend wurde das Sicherungssystem anhand einer Vorrichtung mit zwei Baugruppen beschrieben, die über eine Funkverbindung miteinander in Verbindung stehen. Selbstverständlich ist es auch möglich, anstelle oder zusätzlich zu einer Funkverbindung eine Kabelverbindung der Baugruppen vorzusehen. Die für die Funkverbindung entsprechend benötigten Teile könnten dann entfallen. Die Kabelverbindung kann als separate Signalleitung oder als Leitung innerhalb eines Kabelbaums ausgebildet sein. Auch ist es möglich, die Signale auf eine bestehende Verbindungsleitung z. B. für eine Betriebsfunktion aufzumodulieren. Auch ist eine Übermittlung der Signale mittels eines Datenbusses denkbar.

Ferner kann vorgesehen werden, daß das System eine zusammenhängende Baueinheit ist. Die Schalteinheiten können dann lediglich als Relais ausgebildet sein, die an einer beliebigen, vorzugsweise versteckten Stelle in der Stromversorgung der betreffenden Betriebsfunktion bzw. des Alarmschaltkreis angeordnet sind. Die erste Baugruppe und das Empfängermodul beispielsweise nur zum Empfang des zweiten Signals könnten dann in einem Gehäuse untergebracht sein. Auf das Sendermodul kann dann ggf. verzichtet werden.

Es kann auch vorgesehen werden, daß das System so ausgebildet ist, daß der Funkempfänger mit den Schalteinheiten über eine Kabelverbindung zur Übermittlung des ersten Schaltsignals miteinander in Verbindung steht, wobei wenigstens eine Schalteinheit mit einem Empfängermodul versehen oder verbunden ist, durch das das zweite Schaltsignal empfangen wird und die Schalteinheit oder die damit in Verbindung stehenden Schalteinheiten aktiviert. Die Schalteinheiten könnten dazu untereinander oder über den Funkempfänger bzw. die erste Baugruppe miteinander in Verbindung stehen. Das Empfängermodul kann insbesondere bei dieser Ausführungsform von der Schalteinheit getrennt angeordnet sein.

## Patentansprüche

1. Sicherungssystem für Kraftfahrzeuge gegen unbefugte Benutzung mit einem im Kraftfahrzeug (12) angeordneten Funkempfänger (13) zum Empfang eines flächendeckend abgestrahlten Funksignals und zum Erzeugen eines Schaltsignals mit einem ersten Datentelegramm, wenn ein auf den Funkempfänger codiertes Funksignal empfangen wird, und mit wenigstens einer Schalteinrichtung (17) zum Auslösen eines Alarms und/oder zum Unterbrechen wenigstens einer der Betriebsfunktionen des Kraftfahrzeuges aufgrund des Schaltsignals, dadurch gekennzeichnet, daß die Schalteinrichtung aufgrund wenigstens eines zweiten Signals unabhängig von dem Signal mit dem ersten Datentelegramm aktivierbar ist.

2. Vorrichtung nach Anspruch 1, dadurch gekennzeichnet, daß der Funkempfänger eine erste Baugruppe (11) bildet und die Schalteinrichtung (17) wenigstens eine zweite Baugruppe (14) bildet, die über wenigstens ein Signalkabel miteinander in Verbindung stehen.

3. Sicherungssystem für Kraftfahrzeuge gegen unbefugte Benutzung mit einem im Kraftfahrzeug (12) angeordneten Funkempfänger (13) zum Empfang eines flächendeckend abgestrahlten Funksignals und zum Erzeugen eines Schaltsignals, wenn ein auf den Funkempfänger codiertes Funksignal empfangen wird, und mit wenigstens einer Schalteinrichtung (17) zum Auslösen eines Alarms und/oder zum Unterbrechen wenigstens einer der Betriebsfunktionen des Kraftfahrzeuges, wobei der Funkempfänger mit einem Sendermodul (15) eine erste Baugruppe (11) bildet und die Schalteinrichtung (17) mit einem Empfängermodul (25) wenigstens eine zweite Baugruppe (14) bildet, und das Sendermodul aufgrund des Schaltsignals ein drahtloses Funksignal mit einem ersten Datentelegramm (1) zu dem Empfängermodul sendet, um die Schalteinrichtung zu aktivieren, dadurch gekennzeichnet, daß die Schalteinrichtung aufgrund wenigstens eines zweiten Signals unabhängig von dem Funksignal der ersten Baugruppe aktivierbar ist.

4. Sicherungssystem nach einem der Ansprüche 1 bis 3, dadurch gekennzeichnet, daß die Schalteinrichtung und/oder die zweite Baugruppe einen Zeitgeberschaltkreis (20) aufweist, der bei Erreichen einer vorbestimmbaren Zeit das zweite Signal ausgibt, und daß der Funkempfänger und/oder die erste Baugruppe wenigstens ein zeitlich getaktetes Signal oder Funksignal mit einem anderen Datentelegramm (2) an die Schalteinheit und/oder die zweite Baugruppe übermittelt, das den Zeitgeberschaltkreis zurücksetzt, so daß bei gestörtem Funkempfänger und/oder unterbrochener Funkverbindung und/oder Signalverbindung die Schalteinrichtung (17) nach Ablauf der vorbestimmbaren Zeit aktiviert wird.

5. Sicherungssystem nach einem der Ansprüche 1 bis 4, dadurch gekennzeichnet, daß das zweite Signal mit dem zweiten Datentelegramm von einer Sendestation (22, 23) mit begrenzter Reichweite in der Nähe des Kraftfahrzeuges aussendbar ist und von dem Empfängermodul der zweiten Baugruppe empfangen wird.

6. Sicherungssystem nach Anspruch 5, dadurch gekennzeichnet, daß die Sendestation mit begrenzter Reichweite ein Handsender (23) ist.

7. Sicherungssystem nach Anspruch 5, dadurch gekennzeichnet, daß mehrere Sendestationen (22) mit begrenzter Reichweite entlang einer Grenze eines Staates aufgestellt sind.

8. Sicherungssystem nach einem der Ansprüche 1 bis 7, dadurch gekennzeichnet, daß das erste und das zweite Signal unterschiedliche Datentelegramme aufweisen, und daß aufgrund der unterschiedlichen Datentelegramme verschiedene Schalteinrichtungen aktivierbar sind.

9. Sicherungssystem nach einem der Ansprüche 1 bis 8, dadurch gekennzeichnet, daß das Sicherungssystem derart programmierbar ist, daß die Schalteinheit nur aufgrund von Signalen mit bestimmten Datentelegrammen, insbesondere nur von dem ersten Signal, aktivierbar ist.

10. Sicherungssystem nach einem der Ansprüche 1 bis 9, dadurch gekennzeichnet, daß ein Codezahlenschloß zum Programmieren und/oder zum Rücksetzen der Schalteinrichtung vorgesehen ist.

11. Sicherungssystem nach einem der Ansprüche 1 bis 10, dadurch gekennzeichnet, daß das getaktete Zeitsignal des Sendermoduls ein Datentelegramm enthält, anhand dessen das zweite Signal von einem externen Empfangs- und Sendegerät (23) erzeugt werden kann.

12. Sicherungssystem nach einem der Ansprüche 1 bis 11, dadurch gekennzeichnet, daß das Datentelegramm des getakteten Zeitsignals Angaben über das Kraftfahrzeug in codierter Form enthält.

13. Sicherungssystem nach einem der Ansprüche 1 bis 12, dadurch gekennzeichnet, daß das externe Empfangs- und Sendegerät durch eine zusätzliche Codierung gesichert ist.
